(19) Europäisches Patentamt
European Patent Office
Office européen des brevets

(11) **EP 2 119 688 A1**

(12) **EUROPEAN PATENT APPLICATION**
published in accordance with Art. 153(4) EPC

(43) Date of publication:
**18.11.2009 Bulletin 2009/47**

(21) Application number: **08703113.4**

(22) Date of filing: **11.01.2008**

(51) Int Cl.:
**C04B 37/00** (2006.01)      **B01D 39/20** (2006.01)

(86) International application number:
**PCT/JP2008/050249**

(87) International publication number:
**WO 2008/096569 (14.08.2008 Gazette 2008/33)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.02.2007 JP 2007024971**

(71) Applicant: **NGK Insulators, Ltd.**
**Nagoya-shi, Aichi 467-8530 (JP)**

(72) Inventors:
• **KAWAI, Masaaki**
**Nagoya-shi**
**Aichi 467-8530 (JP)**

• **MORIMOTO, Kenji**
**Nagoya-shi**
**Aichi 467-8530 (JP)**

• **KODAMA, Suguru**
**Nagoya-shi**
**Aichi 467-8530 (JP)**

• **SATO, Fumiharu**
**Nagoya-shi**
**Aichi 467-8530 (JP)**

(74) Representative: **Paget, Hugh Charles Edward et al**
**Mewburn Ellis LLP**
**33 Gutter Lane**
**London**
**EC2V 8AS (GB)**

(54) **HONEYCOMB SEGMENTS JOINED BODY FOR DPF AND BONDING MATERIAL COMPOSITION FOR THE JOINED BODY**

(57) Disclosed is a joined body in which two or more joining targets are integrally joined via bonding material layers. In the joined body, the bonding material layers have a heat capacity of 1.6 $J/cm^3{\cdot}K$ or more per unit volume at room temperature.

FIG.1

**Description**

Technical Field

The present invention relates to a joined body formed by integrally joining a plurality of joining targets such as honeycomb segments constituting a honeycomb structure, a manufacturing method of the joined body, a bonding material composition for obtaining the joined body, and a manufacturing method of the bonding material composition.

Background Art

A honeycomb structure is broadly used as a collection filter for an exhaust gas, for example, a diesel particulate filter (DPF) for collecting and removing a particulate material (particulates) included in an exhaust gas from a diesel engine or the like.

Such a honeycomb structure has a structure in which a plurality of cells as through channels for a fluid partitioned and formed by porous partition walls made of, for example, silicon carbide (SiC) are arranged in parallel with one another in a central axis direction. Moreover, the ends of the adjacent cells are alternately plugged (in a checkered pattern). That is, one cell has one end thereof being opened, and the other end thereof being plugged. Another cell adjacent to this cell has one end thereof being plugged, and the other end thereof being opened.

In such a structure, the exhaust gas caused to flow into predetermined cells (the inflow cells) from one end of the structure is passed through the porous partition walls and discharged through cells (the outflow cells) adjacent to the inflow cells, and the particulate material (the particulates) included in the exhaust gas is collected by the partition walls when the particulate material is passed through the partition walls, whereby the exhaust gas can be purified.

To use such a honeycomb structure (the honeycomb filter) continuously for a long time, the filter needs to be periodically subjected to a regeneration treatment. That is, to decrease a pressure loss increased by the particulates deposited in the filter with an elapse of time and to bring a filter performance back into an initial state, the particulates deposited in the filter need to be burnt and removed. There have been problems that a large heat stress is generated during the regeneration of this filter and that this heat stress causes defect such as crack or breakdown in the honeycomb structure. To meet a demand for the improvement of a thermal shock resistance with respect to this heat stress, there is suggested a honeycomb structure having a divided structure in which a plurality of honeycomb segments are integrally joined by bonding material layers and provided with a function of scattering and alleviating the heat stress, whereby the thermal shock resistance of the structure can be improved to a certain degree.

As an example of such a honeycomb structure in which the plurality of honeycomb segments are integrally joined by the bonding material layers, a honeycomb filter is disclosed in which a thermal expansion coefficient $\alpha_L$ of the bonding material layers which join the honeycomb segments and a thermal expansion coefficient $\alpha_F$ of the honeycomb segments have a relation of $0.01 < |\alpha_L - \alpha_F|/\alpha_F < 1.0$ (see Patent Document 1). Moreover, as another example, a honeycomb filter is disclosed in which in the section of each honeycomb segment constituting the honeycomb filter, the section being vertical to an axial direction, the heat capacity of the center of the section is higher than that of the peripheral portion of the section (see Patent Document 2).

Furthermore, in the honeycomb structure disclosed in Patent Document 1, it is suggested that when a catalyst is loaded on the honeycomb structure for a purpose of the purification of the exhaust gas, the heat capacity of the bonding material layer per unit volume is decreased to immediately raise the temperature of the catalyst to the activation temperature thereof. However, when the heat capacity of the bonding material layer is decreased in this manner, the temperature of the honeycomb structure rises (abnormally rises) to a temperature not less than a durability temperature during the regeneration treatment of the filter or the like, and the life of the structure might shorten.

Moreover, in the honeycomb structure disclosed in Patent Document 2, the temperature of the center of the section of the structure more easily rises as compared with the peripheral portion of the section of the structure during the regeneration of the filter, and for a purpose of setting the heat capacity of the center of the section to a heat capacity higher than that of the peripheral portion to alleviate the generation of the heat stress due to the nonuniformity of a temperature distribution, the thickness of the partition wall or the bonding material layer of the honeycomb segment positioned in the center of the section of the structure is set to a thickness larger than that of the partition wall or the bonding material layer of the honeycomb segment positioned in the peripheral portion of the section of the structure. In this method, however, the flow rate of the exhaust gas in the center of the section of the honeycomb structure tends to decrease as compared with the peripheral portion of the section of the structure, and hence there is a demand for such a heat stress alleviating countermeasure that the influence on the performance of the honeycomb structure can further be decreased.

Patent Document 1: WO03/067041
Patent Document 2: JP-A-2003-254034

Disclosure of the Invention

The present invention has been developed in view of such a conventional situation, and a main object thereof is to provide a joined body in which two or more joining targets are integrally joined via bonding material layers, whereby the abnormal temperature rise of the center of the joined body can be suppressed without adversely affecting the characteristics of the joined body.

To achieve the above object, according to the present invention, a joined body, a bonding material composition, a manufacturing method of the bonding material composition, and a manufacturing method of the joined body are provided as follows.

[1] A joined body in which two or more joining targets are integrally joined via bonding material layers, wherein the bonding material layers have a heat capacity of 1.6 $J/cm^3 \cdot K$ or more per unit volume at room temperature.

[2] The joined body according to [1], wherein the bonding material layers have specific heat of 800 $J/kg \cdot K$ or more at room temperature, and a bulk density of 1.50 $g/cm^3$ or more.

[3] The joined body according to [1] or [2], wherein the bonding material layers contain a filler having specific heat of 550 $J/kg \cdot K$ or more at room temperature.

[4] The joined body according to [3], wherein the bonding material layers are formed of a bonding material composition containing the filler and an inorganic adhesive as main components.

[5] The joined body according to [4], wherein the inorganic adhesive is colloidal silica.

[6] The joined body according to any one of [3] to [5], wherein the filler contains at least one selected from the group consisting of $SiC$, $Al_2O_3$, $Al_2O_3$-$SiO_2$, cordierite, $Si_3N_4$, spinel, $TiO_2$, mica and $MgO$-$SiO_2$.

[7] The joined body according to any one of [1] to [6], wherein the joining targets are honeycomb segments.

[8] The joined body according to [7], which is used in a filter for the purification of a diesel exhaust gas.

[9] A bonding material composition which is used to form bonding material layers during the manufacturing of a joined body formed by integrally joining two or more joining targets via the bonding material layers and which has a heat capacity of 1.6 $J/cm^3 \cdot K$ or more per unit volume at room temperature after the bonding material composition is dried and hardened.

[10] A manufacturing method of a bonding material composition, comprising the steps of: mixing and kneading a material containing, as main components, a filler having specific heat of 550 $J/kg \cdot K$ or more at room temperature and an inorganic adhesive to obtain a paste-like state.

[11] The manufacturing method of the bonding material composition according to [10], wherein the material further contains, as sub-components, an organic binder, a dispersant and water.

[12] A manufacturing method of a joined body, comprising the steps of integrally joining two or more joining targets by use of the bonding material composition according to [9].

[13] The manufacturing method of the joined body according to [12], wherein the joining targets are honeycomb segments.

In the joined body of the present invention, each of the bonding material layers of the joined body has a heat capacity higher than that of each bonding material layer of a conventional joined body, and hence even in a severe thermal environment, for example, during filter regeneration, the bonding material layers can effectively absorb the heat, whereby the abnormal temperature rise of the center of the joined body can be suppressed without adversely affecting the characteristics of the joined body. Moreover, the bonding material composition of the present invention has a high heat capacity after the composition is dried and hardened. Therefore, when the bonding material layers are formed by using this composition, the joined body having the above-mentioned effect and an excellent durability can be obtained. According to the manufacturing method of the bonding material composition of the present invention, the bonding material composition having a high heat capacity as described above can be manufactured. According to the manufacturing method of the joined body of the present invention, the joined body having the excellent durability can be manufactured.

Brief Description of the Drawings

Fig. 1 is a schematic perspective view showing one example of an embodiment of a joined body (a honeycomb structure) according to the present invention;
Fig. 2 is an enlarged view of a main part showing the example of the embodiment of the joined body (the honeycomb structure) according to the present invention;
Fig. 3 is a schematic perspective view of a joining target (a honeycomb segment) constituting the joined body (the honeycomb structure) according to the present invention; and
Fig. 4 is a sectional view cut along the A-A line of Fig. 3.

Description of Reference Numerals

1: honeycomb structure, 2: honeycomb segment, 4: coating material, 5: cell, 6: partition wall, 7: filling material, and 9: bonding material layer.

Best Mode for Carrying out the Invention

Hereinafter, the present invention will be described in accordance with a specific embodiment, but the present invention is not limited to this embodiment when interpreted, and the present invention can variously be altered, modified or improved based on the knowledge of any person skilled in the art without departing from the scope of the present invention.

A joined body of the present invention is formed by integrally joining two or more joining targets via bonding material layers, and mainly **characterized in that** the bonding material layers have a heat capacity of 1.6 J/cm$^3$•K or more per unit volume at room temperature.

As described above, the bonding material layers of the joined body of the present invention have a heat capacity of 1.6 J/cm$^3$•K or more, preferably 1.7 J/cm$^3$•K or more, further preferably 1.8 J/cm$^3$•K or more per unit volume at room temperature, and joining targets such as honeycomb segments are integrally joined via the bonding material layers having such a high heat capacity to form a joined body such as a honeycomb filter. In consequence, even in a severe thermal environment, for example, during filter regeneration, the bonding material layers can effectively absorb the heat to suppress the abnormal temperature rise of the center of the joined body, so that a temperature gradient in the joined body decreases, and the joined body exerts an excellent durability.

Moreover, when the bonding material layers having such a high heat capacity are used, for the purpose of suppressing the abnormal temperature rise of the center of the joined body, it is not necessary to take any countermeasure that adversely affects the characteristics of the joined body (e.g., the flow of an exhaust gas in a case where the joined body is used as a filter for the purification of the exhaust gas). For example, it is not necessary to set the thickness of a partition wall or the bonding material layer of a honeycomb segment positioned in the center of the body to a thickness larger than that of the partition wall or the bonding material layer of a honeycomb segment positioned in the peripheral portion of the body.

The bonding material layers of the joined body of the present invention preferably have specific heat of 800 J/kg•K or more at room temperature, and a bulk density of 1.50 g/cm$^3$ or more. Since the bonding material layers have such specific heat and bulk density, the durability of the joined body can further be improved.

The bonding material layers of the joined body of the present invention preferably contain a filler (particles or a powder-like substance) having specific heat of 550 J/kg•K or more, preferably 600 J/kg•K or more, further preferably 700 J/kg•K or more at room temperature. When the specific heat of the filler for use is less than 550 J/kg•K, it is difficult to obtain the bonding material layers having a heat capacity of 1.6 J/cm$^3$•K or more per unit volume. Specific examples of the material of the filler preferably include SiC, $Al_2O_3$, $Al_2O_3$-$SiO_2$, cordierite, $Si_3N_4$, spinel, $TiO_2$, mica, and MgO-$SiO_2$. They may be used alone or as a combination of a plurality of types of them, or may be used as a combination with another material. Moreover, when fibrous or plate-like particles having a shape with a high aspect ratio are used in the filler, the mechanical characteristics of the bonding material layers can be improved.

The bonding material layers of the joined body of the present invention preferably contain, as main components, the filler having specific heat of 550 J/kg•K or more at room temperature as described above, and an inorganic adhesive. It is to be noted that here "the filler and the inorganic adhesive are contained as the main components" means that the total amount of the filler and the inorganic adhesive is 55 vol% or more of the whole bonding material layers.

Specific examples of the material of the inorganic adhesive include colloidal silica (silica sol), colloidal alumina (alumina sol), another metal oxide sol, ethyl silicate, water glass, silica polymer, and aluminum phosphate, but colloidal silica is especially preferably used because this material is excellent in bonding force, affinity for the filler, chemical stability, thermal resistance and the like.

There is not any special restriction on each joining target constituting the joined body of the present invention, but examples of the joining target preferably include a ceramic member for obtaining a ceramic structure and especially preferably include a honeycomb segment for obtaining a honeycomb structure. The honeycomb structure obtained by joining such honeycomb segments can preferably be used in an application such as a diesel exhaust gas purifying filter which is exposed to the severe thermal environment during the regeneration treatment of the filter.

A bonding material composition of the present invention is used to form the bonding material layers during the manufacturing of the joined body formed by integrally joining two or more joining targets via the bonding material layers, and is **characterized in that** a heat capacity is 1.6 J/cm$^3$•K or more per unit volume at room temperature after the bonding material composition is dried and hardened. When the bonding material layers are formed by using such a bonding material composition during the manufacturing of the joined body, the joined body of the present invention having the above-mentioned effect and an excellent durability can be obtained.

In a manufacturing method of the bonding material composition of the present invention, if necessary, an organic binder (e.g., methyl cellulose (MC), carboxymethyl cellulose (CMC) or the like), a dispersant, water and the like are added to a raw material containing, as the main components, the filler having specific heat of 550 J/kg•K or more at room temperature and the inorganic adhesive at a predetermined ratio, and the material is mixed and kneaded into a paste-like state by use of a kneader such as a mixer.

In a manufacturing method of the joined body of the present invention, two or more joining targets are integrally joined by use of the bonding material composition of the present invention. Specifically, the outer wall surface of a joining target is coated with the bonding material composition of the present invention having a desired thickness, and another joining target is disposed on the joining target. This step is repeated to prepare a laminated body of the joining targets, and a pressure is appropriately applied from the outside to the body to join the whole body, followed by drying. Moreover, after the drying, the outer periphery of the joined body is processed into a predetermined shape, if necessary, and the processed outer peripheral surface of the body may be coated with a coating material and dried again.

Next, there will be described a specific constitution example of a case where the joined body of the present invention is a honeycomb structure in which a plurality of honeycomb segments (joining targets) are joined.

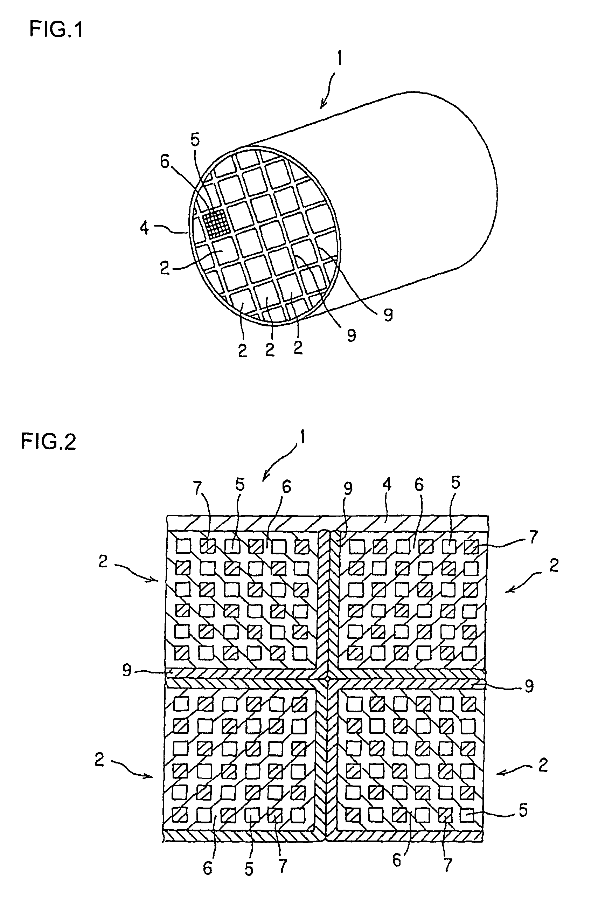

As shown in Figs. 1 and 2, a honeycomb structure 1 has a constitution of a honeycomb segment joined body formed by integrally joining honeycomb segments 2 by bonding material layers 9 made of a bonding material composition of the present invention. Each of the honeycomb segments has a structure in which a plurality of cells 5 as through channels for a fluid partitioned and formed by porous partition walls 6 are arranged in parallel with one another in a central axis direction, and each honeycomb segment constitutes a part of the whole structure. Moreover, the honeycomb segments are assembled in a direction vertical to the central axis of the honeycomb structure 1 to constitute the whole structure.

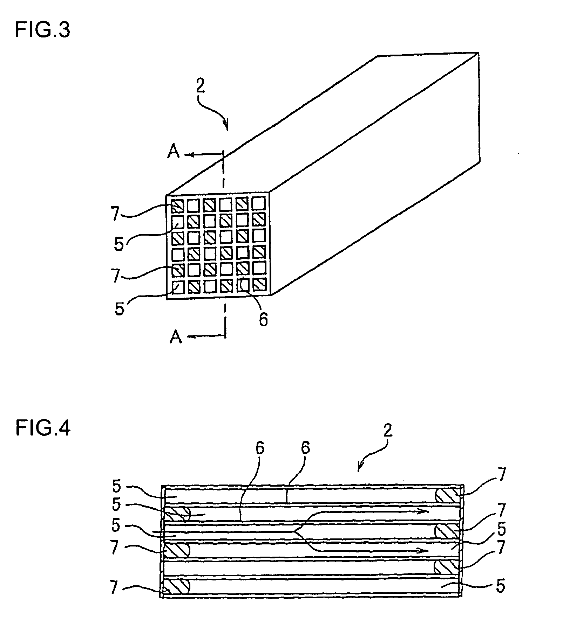

The honeycomb segments 2 integrally joined by the bonding material layers 9 are ground and processed so that the whole joined body has a desired sectional shape such as a circular shape, an elliptic shape, a triangular shape or a square shape, and the outer peripheral surface of the body is coated with a coating material 4. It is to be noted that in a case where this honeycomb structure 1 is used as a DPF, as shown in Fig. 3 and Fig. 4 which is a sectional view cut along the A-A line of Fig. 3, the ends of the cells 5 of the honeycomb segment 2 are alternately plugged with a filling material 7 on each side.

As to predetermined cells 5 (inflow cells), the left ends of the cells are opened as shown in Figs. 3, 4, whereas the right ends thereof are plugged with the filling material 7. As to the other cells 5 (outflow cells) adjacent to these cells, the left ends of the cells are plugged with the filling material 7, and the right ends thereof are opened. By such plugging, as shown in Fig. 2, the end faces of the honeycomb segment 2 have a checkered pattern.

Fig. 4 shows a case where the left side of the honeycomb segment 2 is an inlet of an exhaust gas. The exhaust gas flows into the honeycomb segment 2 from the cells 5 (the inflow cells) which are not plugged but are opened. The exhaust gas flowing into the cells 5 (the inflow cells) passes through the porous partition walls 6, and is discharged from the other cells 5 (outflow cells). Moreover, when the exhaust gas passes through the partition walls 6, a particulate material (particulates) including soot in the exhaust gas is collected by the partition walls 6. Thus, the exhaust gas can be purified. By such collection, the particulates including the soot are deposited in the honeycomb segment 2 with an elapse of time to increase a pressure loss, and hence a regeneration treatment for burning the soot and the like is periodically performed. It is to be noted that Figs. 2 to 4 show the honeycomb segment 2 having the whole square sectional shape, but the honeycomb segment may have a triangular shape, a hexagonal shape or the like. Moreover, the cells 5 may have a sectional shape such as a triangular shape, a hexagonal shape, a circular shape or an elliptic shape.

As shown in Fig. 2, the bonding material layers 9 are made of the bonding material composition of the present invention, and are applied to the outer peripheral surfaces of the honeycomb segments 2 to exert a function of joining the honeycomb segments 2 to one another. The bonding material layers 9 may be applied to the outer peripheral surfaces of the adjacent honeycomb segments 2, respectively, or to one of the facing outer peripheral surfaces of the adjacent honeycomb segments 2. The layer is preferably applied only to one of the facing surfaces in this manner, whereby the amount of the bonding material layers 9 for use can be saved. There is not any special restriction on a direction in which the bonding material layer 9 is applied, and the layer may be applied in a longitudinal direction in the outer peripheral surface of the honeycomb segment, a direction vertical to the longitudinal direction in the outer peripheral surface of the honeycomb segment, a direction vertical to the outer peripheral surface of the honeycomb segment or the like, but the layer is preferably applied in the longitudinal direction in the outer peripheral surface of the honeycomb segment. The thickness of the bonding material layer 9 is determined in consideration of a joining force between the honeycomb segments 2, and is appropriately selected from a range of, for example, 0.5 to 3.0 mm.

From the viewpoints of strength and thermal resistance, examples of the material of the honeycomb segment 2 for use in the present embodiment include a material made of at least one selected from the group consisting of silicon carbide (SiC), a silicon-silicon carbide based composite material made by using silicon carbide (SiC) as an aggregate and silicon (Si) as a combining material, silicon nitride, cordierite, mullite, alumina, spinel, a silicon carbide-cordierite based composite material, lithium aluminum silicate, aluminum titanate and an Fe-Cr-Al based metal. Above all, the material is preferably made of silicon carbide (SiC) or the silicon-silicon carbide based composite material.

To prepare the honeycomb segment 2, for example, a binder such as methyl cellulose, hydroxypropoxyl cellulose, hydroxyethyl cellulose, carboxymethyl cellulose or polyvinyl alcohol, a pore former, a surfactant, water as a solvent and the like are added to the above appropriately selected material, to obtain a kneaded clay having plasticity, and this clay is extruded into the above shape, and then dried with microwaves, hot air or the like, followed by sintering.

As the filling material 7 for use in plugging the cells 5, a material similar to that of the honeycomb segment 2 may be used. To plug the cells with the filling material 7, for example, while the cells 5 which are not to be plugged are masked, the end face of the honeycomb segment 2 may be immersed into the slurry-like filling material to fill openings of the cells 5. The openings of the cells may be filled with the filling material 7 before or after firing the formed honeycomb segment 2, but the filling is preferably performed before the firing, because a firing step can end once.

After the above preparation of the honeycomb segment 2, the outer peripheral surface of the honeycomb segment 2 is coated with a paste-like bonding material composition to form the bonding material layer 9, and a plurality of honeycomb segments 2 are assembled so as to obtain a predetermined three-dimensional shape (the whole honeycomb structure 1). This assembled honeycomb segments are pressed, and then heated to dry. Thus, a joined body is prepared in which the plurality of honeycomb segments 2 are integrally joined. Afterward, this joined body is ground and processed into the above shape, and the outer peripheral surface of the body is coated with the coating material 4, and heated to dry. Thus, the honeycomb structure 1 shown in Fig. 1 is prepared. As the material of the coating material 4, a material similar to that of the bonding material layer 9 may be used. The thickness of the coating material 4 is appropriately selected in a range of, for example, 0.1 to 1.5 mm.

Examples

Hereinafter, the present invention will be described in more detail in accordance with examples, but the present invention is not limited to these examples.

(Preparation of Honeycomb Segment)

SiC powder and metal Si powder were mixed at a mass ratio of 80:20, and a pore former, an organic binder, a surfactant and water were added to and kneaded with this mixture, to prepare a kneaded clay having plasticity. This clay was extruded and dried to obtain a formed honeycomb segment body having a partition wall thickness of 310 $\mu$m, a cell density of about 46.5 cells/cm$^2$ (300 cells/square inch), a square sectional shape with one side of 35 mm, and a length of 254 mm. The ends of cells of this formed honeycomb segment body were plugged so that the end faces of the body had a checkered pattern. That is, the ends of the cells were plugged so that the ends of the adjacent cells were plugged on opposite sides. As a filling material for the plugging, a material similar to that of the honeycomb segment was used. The ends of the cells were plugged in this manner and dried, and the body was degreased in the atmosphere at about 400°C, and then fired in an Ar inactive atmosphere at about 1450°C, thereby obtaining the porous honeycomb segment in which SiC crystal particles were combined by Si.

(Preparation of Bonding material Composition)

On conditions shown in Table 1, a mixture of one or two fillers and an organic binder was further mixed with an inorganic adhesive, a dispersant and water, and kneaded by a mixer for 30 minutes, whereby paste-like bonding material compositions (Examples 1 to 15, Comparative Examples 1 to 4) having different compositions were obtained, respectively. At this time, the amount of the water to be added was regulated so that a paste viscosity was in a range of 20 to 80 Pa•s. It is to be noted that ratios of the filler and the inorganic adhesive in Table 1 are shown in vol%, respectively, while the total amount of them is 100. Moreover, the appropriate amounts of the organic binder, the dispersant and the water were added by superaddition.

(Preparation of Honeycomb Structure)

The outer wall surface of the honeycomb segment was coated with the bonding material composition so that a coating direction was the longitudinal direction of the honeycomb segment and so that the composition had a thickness of about 1 mm, thereby forming a bonding material layer, and another honeycomb segment was disposed on the layer. This step was repeated to prepare a laminated honeycomb segment body including 16 honeycomb segments as a combination of vertical 4 $\times$ lateral 4, and a pressure or the like was appropriately applied from the outside to the body to join the whole body, followed by drying at 140°C for 2 hours, thereby obtaining a joined honeycomb segment body. The outer periphery of the resultant joined honeycomb segment body was cut into a cylindrical shape, and the outer peripheral surface of the body was coated with a coating material, followed by drying and hardening at 700°C for 2 hours, thereby obtaining a honeycomb structure.

(Evaluation of Bonding material Layer of Joined Body)

The specific heat of the filler used in the bonding material composition, and the specific heat, bulk density and heat capacity per unit volume (values at room temperature) of the bonding material layer of the resultant honeycomb structure (the joined body) were obtained as follows, and a filter regeneration test was further performed to evaluate durability. The results are shown in Table 1.

[Specific Heat of Filler]

Each filler of Table 1 was measured by a differential scanning calorimeter Pyris1 (trade name) manufactured by Perkin Elmer Inc.

[Specific Heat of Bonding material Layer]

The portion of the bonding material layer was cut as a 10 mm $\times$ 10 mm $\times$ 1 mm plate-like portion from the honeycomb structure, and measured in conformity to JIS R1611.

[Bulk Density of Bonding material Layer]

The portion of the bonding material layer was cut as a 10 mm $\times$ 10 mm $\times$ 1 mm plate-like portion from the honeycomb structure, and calculated by Archimedes process.

[Heat Capacity of Bonding material Layer per Unit Volume]

The heat capacity of the bonding material layer per unit volume was calculated from the following equation.

$$\text{Heat capacity } (J/cm^3 \bullet K) \text{ per unit volume} = \text{specific}$$

$$\text{heat } (J/kg \bullet K) \times \text{bulk density } (g/cm^3)/1000$$

[Filter Regeneration Test]

A ceramic non-expansible mat was wound as a grasping material around the outer peripheral portion of the honeycomb structure, and the structure was pushed into a canning can member made of SUS409 to obtain a canning structure. Afterward, a burning gas including particulates containing soot generated by the burning of diesel fuel light oil was caused to flow into the honeycomb structure from one end face thereof (an exhaust gas inflow end face), and discharged from the opposite end face thereof (an exhaust gas outflow end face), whereby the particulates were collected in the honeycomb structure. Afterward, the structure was left to stand, and once cooled to room temperature. Then, the burning gas including a given ratio of oxygen was caused to flow into the honeycomb structure from the exhaust gas inflow end face thereof at 800˚C, to perform a filter regeneration test for burning and removing the soot.
First, the honeycomb structure prepared by using the bonding material composition of Comparative Example 2 was subjected to the filter regeneration test, and such a standard amount of deposited particulates that the structure was apparently cracked was determined as a reference amount. Afterward, as to the honeycomb structures prepared by using the bonding material compositions of Examples 1 to 15 and Comparative Examples 1, 3 and 4, the reference amount of the particles was deposited, and the filter regeneration test was performed. After the test, the presence/ absence of the crack in the appearance of each honeycomb structure was confirmed visually and with an optical microscope. A case where any crack was not confirmed visually or with the optical microscope was evaluated as "a circle", a case where any crack was not visually confirmed and the crack could be confirmed only with the optical microscope was evaluated as "a triangle", and a case where the crack could be confirmed visually and with the optical microscope was evaluated as "a cross".
[Table 1]

| | Filler | | Filler | | Inorganic adhesive | Bonding material layer | | | Filter regeneration test |
|---|---|---|---|---|---|---|---|---|---|
| | Material/ratio [vol%] | Specific heat*1 [J/(kg·K)] | Material/ratio [vol%] | Specific heat*2 [J/(kg·K)] | Material/ratio [vol%] | Specific heat*3 [J/(kg·K)] | Bulk density*4 [g/cm$^3$] | Heat capacity per unit volume*5 [J/cm$^3$•K] | |
| Example 1 | Alumina/42 | 790 | - | - | Colloidal silica/58 | 888 | 2.13 | 1.89 | ○ |
| Example 2 | Mullite/42 | 750 | - | - | Colloidal silica/58 | 836 | 1.91 | 1.60 | ○ |
| Example 3 | $Al_2O_3$-$SiO_2$/57 | 780 | - | - | Colloidal silica/43 | 900 | 1.79 | 1.61 | ○ |
| Example 4 | $Al_2O_3$-$SiO_2$/57 | 780 | - | - | Colloidal silica/43 | 947 | 1.79 | 1.70 | ○ |
| Example 5 | Cordierite/25 | 730 | SiC/25 | 710 | Colloidal silica/50 | 877 | 1.89 | 1.66 | ○ |
| Example 6 | Cordierite/25 | 730 | SiC/25 | 710 | Colloidal silica/50 | 929 | 1.73 | 1.61 | ○ |
| Example 7 | Cordierite/25 | 730 | SiC/25 | 710 | Colloidal silica/50 | 947 | 1.79 | 1.69 | ○ |
| Example 8 | Cordierite/30 | 730 | SiC/30 | 710 | Colloidal silica/40 | 838 | 1.92 | 1.61 | ○ |
| Example 9 | Cordierite/30 | 730 | SiC/30 | 710 | Colloidal silica/40 | 950 | 1.72 | 1.63 | ○ |
| Example 10 | $Al_2O_3$/20 | 790 | SiC/41 | 710 | Colloidal silica/39 | 760 | 2.13 | 1.62 | ○ |
| Example 11 | Cordierite/25 | 730 | $Si_3N_4$/25 | 720 | Colloidal silica/50 | 869 | 1.89 | 1.64 | ○ |
| Example 12 | Spinel/42 | 820 | - | - | Colloidal silica/58 | 942 | 2.04 | 1.92 | ○ |

EP 2 119 688 A1

| | Filler | | Filler | | Inorganic adhesive | Bonding material layer | | | Filter regeneration test |
|---|---|---|---|---|---|---|---|---|---|
| | Material/ratio [vol%] | Specific heat*1 [J/ (kg·K)] | Material/ratio [vol%] | Specific heat*2 [J/ (kg·K)] | Material/ratio [vol%] | Specific heat*3 [J/ (kg·K)] | Bulk density*4 [g/cm$^3$] | Heat capacity per unit volume*5 [J/cm$^3$•K] | |
| Example 13 | Cordierite/25 | 730 | $TiO_2$/25 | 680 | Colloidal silica/ 50 | 871 | 2.13 | 1.86 | ○ |
| Example 14 | Mica/57 | 860 | - | - | Colloidal silica/ 43 | 928 | 1.75 | 1.62 | ○ |
| Example 15 | $MgO$-$SiO_2$/20 | 750 | SiC/25 | 710 | Colloidal silica/ 55 | 878 | 1.88 | 1.65 | ○ |
| Comparative Example 1 | $Al_2O_3$-$SiO_2$/ 30 | 780 | SiC/30 | 710 | Colloidal silica/ 40 | 889 | 1.02 | 0.91 | × |
| Comparative Example 2 | $Al_2O_3$/14 | 790 | SiC/47 | 710 | Colloidal silica/ 39 | 752 | 2.06 | 1.55 | × |
| Comparative Example 3 | $Al_2O_3$-$SiO_2$/ 36 | 780 | SiC/24 | 710 | Colloidal silica/ 40 | 900 | 1.33 | 1.20 | × |
| Comparative Example 4 | $Al_2O_3$-$SiO_2$/ 30 | 780 | SiC/31 | 710 | Colloidal silica/ 39 | 764 | 1.66 | 1.27 | × |
| *1, *2, *3, *4, *5: Measured value at room temperature | | | | | | | | | |

EP 2 119 688 A1

As shown in Table 1, in the honeycomb structures prepared by forming the bonding material layers by use of the bonding material compositions of Comparative Examples 1 to 4 in which the heat capacity per unit volume at room temperature after drying and hardening was less than 1.6 $J/cm^3$•K, the crack was confirmed visually and with the optical microscope in the filter regeneration test. On the other hand, in the honeycomb structures prepared by forming the bonding material layers by use of the bonding material compositions of Examples 1 to 15 in which the heat capacity per unit volume at room temperature after the drying and hardening was 1.6 $J/cm^3$•K or more, the crack which could be confirmed at least visually was not generated. Especially in the honeycomb structures prepared by forming the bonding material layers by use of the bonding material compositions of Examples 1 to 9 and 11 to 15 in which the specific heat at room temperature after the drying and hardening was 800 J/kg•K or more and the bulk density was 1.50 $g/cm^3$ or more, the generation of any crack was not recognized even by observation with the optical microscope, and high durability was indicated.

Industrial Applicability

The present invention can preferably be utilized in a joined body obtained by integrally joining a plurality of joining targets, for example, a honeycomb structure obtained by joining a plurality of honeycomb segments, for use in an application such as a DPF.

**Claims**

1. A joined body in which two or more joining targets are integrally joined via bonding material layers, wherein the bonding material layers have a heat capacity of 1.6 $J/cm^3$•K or more per unit volume at room temperature.

2. The joined body according to claim 1, wherein the bonding material layers have specific heat of 800 J/kg•K or more at room temperature, and a bulk density of 1.50 $g/cm^3$ or more.

3. The joined body according to claim 1 or 2, wherein the bonding material layers contain a filler having specific heat of 550 J/kg•K or more at room temperature.

4. The joined body according to claim 3, wherein the bonding material layers are formed of a bonding material composition containing the filler and an inorganic adhesive as main components.

5. The joined body according to claim 4, wherein the inorganic adhesive is colloidal silica.

6. The joined body according to any one of claims 3 to 5, wherein the filler contains at least one selected from the group consisting of SiC, $Al_2O_3$, $Al_2O_3$-$SiO_2$, cordierite, $Si_3N_4$, spinel, $TiO_2$, mica and MgO-$SiO_2$.

7. The joined body according to any one of claims 1 to 6, wherein the joining targets are honeycomb segments.

8. The joined body according to claim 7, which is used in a filter for the purification of a diesel exhaust gas.

9. A bonding material composition which is used to form bonding material layers during the manufacturing of a joined body formed by integrally joining two or more joining targets via the bonding material layers and which has a heat capacity of 1.6 $J/cm^3$•K or more per unit volume at room temperature after the bonding material composition is dried and hardened.

10. A manufacturing method of a bonding material composition, comprising the steps of: mixing and kneading a material containing, as main components, a filler having specific heat of 550 J/kg•K or more at room temperature and an inorganic adhesive to obtain a paste-like state.

11. The manufacturing method of the bonding material composition according to claim 10, wherein the material further contains, as sub-components, an organic binder, a dispersant and water.

12. A manufacturing method of a joined body, comprising the steps of integrally joining two or more joining targets by use of the bonding material composition according to claim 9.

13. The manufacturing method of the joined body according to claim 12, wherein the joining targets are honeycomb segments.

FIG.1

FIG.2

FIG.3

FIG.4

| | INTERNATIONAL SEARCH REPORT | International application No. |
|---|---|---|
| | | PCT/JP2008/050249 |

**A. CLASSIFICATION OF SUBJECT MATTER**
*C04B37/00*(2006.01)i, *B01D39/20*(2006.01)i

According to International Patent Classification (IPC) or to both national classification and IPC

**B. FIELDS SEARCHED**

Minimum documentation searched (classification system followed by classification symbols)
C04B37/00, B01D39/20

Documentation searched other than minimum documentation to the extent that such documents are included in the fields searched
Jitsuyo Shinan Koho        1922-1996     Jitsuyo Shinan Toroku Koho     1996-2008
Kokai Jitsuyo Shinan Koho   1971-2008     Toroku Jitsuyo Shinan Koho     1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-117322 A  (NGK Insulators, Ltd.), 22 April, 2003 (22.04.03), Claims 1 to 2; Par. Nos. [0016], [0021]; tables 2 to 3 & US 2004/0045267 A1    & EP 1437168 A1 & WO 2003/033104 A1    & PL 361655 A | 1-13 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 March, 2008 (26.03.08) | 08 April, 2008 (08.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03067041 A

- JP 2003254034 A